# EUROPEAN PATENT APPLICATION

(11) **EP 1 408 325 A2**
(43) Date of publication of application: **14.04.2004**
(21) Application number: 03255712.6
(22) Date of filing: 12.09.2003
(51) Int. Cl.: G01N 21/35

(54) **Method of measuring exhaust flow constituents**

(30) Priority: 13.09.2002 GB 0221216
(71) Applicant: Delphi Technologies, Inc., Troy, MI 48007 (US)
(72) Inventor: Breitbach, Hermann J., 3328 Crauthem (LU); Duhr, Joel, 3369 Leudelange (LU); Billig, Stefan G., 54453 Nittel (DE)
(74) Representative: Keltie, David Arthur

(57) **Abstract**

A method for measuring the concentration of at least one constituent of an exhaust flow from an engine provided with a gas sensor system (10) having a measurement cell (12), includes transmitting radiation at a reference wavelength (λref) through the measurement cell and calculating a corrected reference intensity which is representative of the intensity of radiation transmitted through the measurement cell (12) at the reference wavelength (λref) and substantially independent of gas sensor system characteristics. The method also includes transmitting radiation at a first measurement wavelength (λ1) through the measurement cell (12) and measuring a first intensity representative of the intensity of radiation transmitted through the measurement cell (12) at the first measurement wavelength. By comparing the first intensity with the corrected reference intensity, the concentration of a constituent of the exhaust stream can be deduced substantially independently of gas sensor system characteristics.

## Description

The invention relates to a method for measuring particulate concentration within an exhaust stream or flow from an engine.

Commercially available exhaust gas sensors facilitate the measurement of constituent elements of an exhaust stream (for example CO, CO₂, NOx) on an engine test bed. In one known arrangement, a sample of gas from the exhaust stream is collected within a gas cell, and is irradiated by means of a laser operating in the optical wavelength range. The intensity of laser radiation transmitted through the cell can be used to determine the concentration of soot particulates in the sample.

In an alternative known scheme, a filter is used to collect soot and other particulates within the exhaust stream and the filter is then weighed to determine the concentration of such particulates. Such schemes, however, are not suitable for use on board vehicles due to their size, complexity and cost. Furthermore, they are not readily adaptable to provide real-time measurements.

It is an object of the present invention to provide a method of measuring the concentration of at least one constituent of an exhaust flow which overcomes or alleviates the aforementioned problems.

According to a first aspect of the present invention, there is provided a method of measuring the concentration of at least one constituent of an exhaust flow from an engine provided with a gas sensor system having a measurement cell, the method comprising:
transmitting radiation at a reference wavelength through the measurement cell and calculating a corrected reference intensity which is representative of the intensity of radiation transmitted through the cell at the reference wavelength and independent of gas sensor system characteristics,
transmitting radiation at a first measurement wavelength through the measurement cell and measuring a first intensity which is representative of the intensity of radiation transmitted through the measurement cell at the first measurement wavelength, and
comparing the first intensity with the corrected reference intensity, thereby to deduce the concentration of a constituent of the exhaust stream substantially independently of gas sensor system characteristics.

In a preferred embodiment, the method comprises:
transmitting radiation at the reference wavelength through the measurement cell prior to engine ignition, and measuring a reference intensity which is representative of the intensity of radiation transmitted through the measurement cell prior to engine ignition,
during engine running, transmitting radiation at the reference wavelength through the measurement cell and measuring a first reference intensity time-averaged over a first time period, and measuring a second reference intensity time-averaged over a second time period,
comparing the second time-averaged reference intensity with the first time-averaged reference intensity so as to deduce a system contribution to the reference intensity, so as to calculate a corrected reference intensity in which the contribution from gas sensor system characteristics is substantially eliminated.

Conveniently, the corrected reference intensity is calculated by subtracting the first reference intensity from the second reference intensity.

In a first embodiment, the method may be applied to a gas sensor system having a measurement cell forming part of a main engine exhaust pipe. Alternatively, the sensor may be provided with sampling means, for example an inlet sample pipe, for providing a sample of gas within the main engine exhaust pipe to a remote measurement cell, or gas sample cell.

In one embodiment, the method may include the step of providing a gas sensor having an emitter module for emitting radiation to be transmitted through the measurement cell and a detection module for measuring the intensity of radiation transmitted through the measurement cell. Preferably, the radiation transmitted to and from the measurement cell may pass through optical fibres.

In one embodiment, the method includes the step of arranging the emitter and detection modules on opposing sides of the measurement cell.

In an alternative embodiment, the method includes the step of arranging the emitter and detection modules in a common unit, the measurement cell being provided with a reflective coating on an internal surface such that radiation transmitted through the measurement cell is reflected back through the cell for detection.

In a preferred embodiment, the first time period is of the order of seconds, typically between 20 and 50 seconds.

In a further preferred embodiment, the second time period is of the order of several milliseconds, typically between 20 and 50 milliseconds

By measuring a first time-averaged intensity over a relatively long time period (e.g. 30 seconds), the measured intensity provides an indication of the extent to which particulate contamination of the sensor which builds up over time (for example, the build-up of particulates on the cell windows) contributes to the second time-averaged intensity measurement. By measuring both, a "corrected" reference value can be deduced, which compensates for such contamination effects.

If the infra red absorption characteristic of particulate contaminants within the exhaust flow is known, the first intensity can be compared to the corrected reference intensity to provide an indication of the concentration of particulates within the exhaust stream that cause radiation incident on the measurement cell to be absorbed, whilst eliminating the contribution due to system characteristics (e.g. wear and ageing effects, and particulate build up through the sensor).

In a further preferred embodiment, the method steps are repeated at two or more measurements wavelengths, to enable the concentration of two or more constituents of the exhaust flow to be calculated.

For example, the method may comprise transmitting radiation at two or more further measurement wavelengths through the measurement cell, and measuring a respective further intensity which is representative of the intensity of radiation transmitted through the measurement cell at the or each further measurement wavelength, and comparing the or each further intensity with the corrected reference intensity, thereby to deduce the concentration of two or more constituents of the exhaust flow.

According to a second aspect of the invention, there is provided a processor for carrying out the method steps as set out in the accompanying claims, the processor including:
means for receiving a signal indicative of a first intensity, which is representative of the intensity of radiation transmitted through the measurement cell at a first measurement wavelength,
means for receiving a signal indicative of a reference intensity,
calculation means for calculating a corrected reference intensity which is representative of radiation intensity transmitted through the measurement cell at a reference wavelength and substantially independent of gas sensor system characteristics, and
means for comparing the first intensity with the corrected reference intensity, thereby to deduce the concentration of a constituent of the exhaust stream substantially independently of gas sensor system characteristics.

The processor preferably includes means for receiving a signal indicative of a reference intensity, which is representative of the intensity of radiation transmitted through the measurement cell prior to engine ignition, means for deducing a first reference intensity during engine running that is time-averaged over a first time period, means for deducing a second reference intensity during engine running that is time-averaged over a second time period, means for comparing the second time-averaged reference intensity with the first time-averaged reference intensity, and means for calculating the corrected reference intensity from the first reference intensity and from said comparison.

For the purpose of this specification, the absorption characteristic of a gas element shall be taken to mean the absorption coefficient of the element as a function of wavelength.

The invention will now be described, by way of example only, with reference to the accompanying drawings in which:
Figure 1 is a schematic diagram of an exhaust gas sensor with which the method of the present invention may be used,
Figure 2 is a graph to illustrate the different contributions to absorption of infra red radiation using the exhaust gas sensor in Figure 1,
Figure 3 is an alternative sensor to that shown in Figure 1, and
Figures 4 to 7 are further alternative sensors to those shown in Figures 1 and 3.

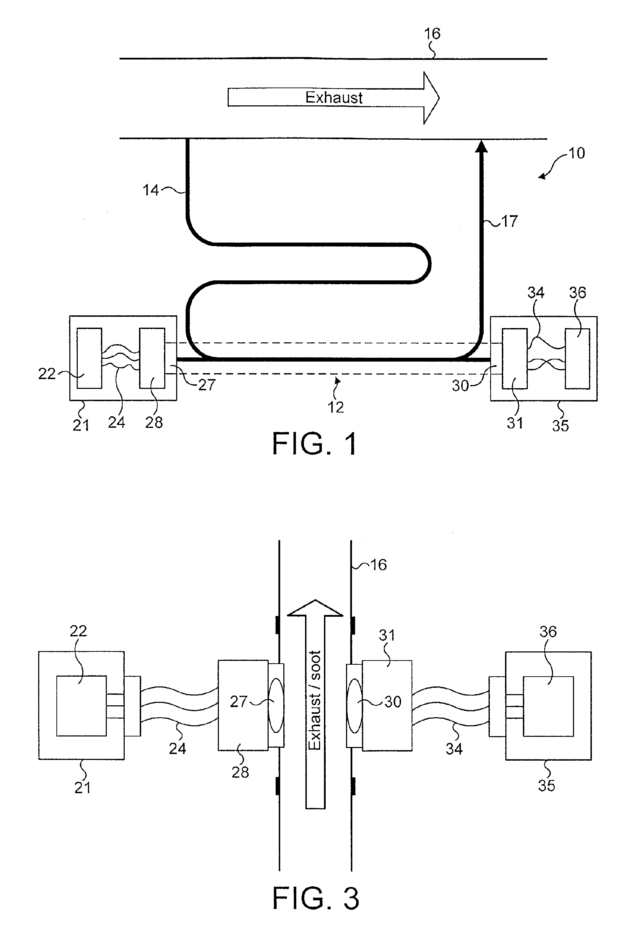

Referring to Figure 1, an exhaust gas sensor system 10 which operates on the principles of infrared absorption includes a measurement cell, or gas sample cell, 12 which is arranged to receive a gas sample from an exhaust stream through an inlet sample pipe 14 in communication with the main exhaust pipe 16 of the associated engine. In use, a sample of gas flows through the inlet pipe 14 and from here through the cell 12 to a gas outlet pipe 17 for return to the bulk exhaust flow. The cell 12 includes inlet and outlet windows at respective inlet and outlet ends of the cell 12. The sensor is preferably mounted upon the vehicle at a location remote from the main exhaust pipe 16 to minimise thermal damage.

An emitter module 21 is provided at the inlet end of the cell 12 and includes a radiation source 22 for emitting radiation at a plurality of wavelengths (e.g. λ1 to λ3) and respective fibre optic lengths 24 through which emitted radiation is transmitted to the cell 12. The fibre optic lengths 24 are coupled through a lens or collimator 28 to an inlet window 27 of the cell. Radiation transmitted through the cell 12 exits through an outlet window 30 of the cell, and is coupled through an outlet collimator 31 and outlet fibre optic lengths 34 to a detector arrangement 36 of a detection module 35. Typically, the detector arrangement 36 includes a plurality of detector elements in the form of semiconductor devices and is arranged to provide output signals indicative of the intensity of radiation, at wavelengths λ1 to λ3, which is transmitted through the cell 12. For each detector element, the output signal will represent the intensity of radiation at a respective wavelength which has passed through the cell 12 unabsorbed by gas within the cell 12.

The emitter modules 21 is controlled by means of the engine controller, which is also arranged to receive output signals from the detection module 35 for manipulation by an associated processor.

For the purpose of this specification, the wavelength(s) at which infra red radiation is transmitted through the cell 12 to deduce a concentration value for a particular constituent shall be referred to as the "measurement wavelength(s)". For clarity, the method of the present invention will initially be described in relation to the measurement of the concentration of one gas constituent of the sample and, hence, for one measurement wavelength (e.g. λ1).

Gases and/or other particulate material within the cell 12 absorb radiation at different wavelengths depending on the constituents of the material. For example, if the infra red absorption profile of a constituent to be measured is known to have a maximum in the absorption characteristic (absorption as a function of wavelength) at λ1, radiation is transmitted through the cell 12 at wavelength λ1 and, by measuring the intensity of radiation which passes unabsorbed through the cell 12 at wavelength λ1, the concentration of that particular constituent within the cell can be deduced.

In order to determine the proportion of radiation which is absorbed in the cell 12 at the measurement wavelength λ1, it is necessary to compare the measured intensity with a "reference intensity measurement". To carry out this comparison, the processor receives a number of different signals, each representative of a different intensity of radiation.

The reference intensity measurement is determined by transmitting a reference beam of radiation through the cell 12, where the reference beam is selected to have a reference wavelength, λref, which is not expected to coincide with the absorption characteristic of gas constituents of the sample. In other words, the reference wavelength is selected to be a wavelength which is expected to pass through the cell 12 substantially unabsorbed by gas. Signals indicative of the intensity of radiation at wavelength λ1 and the intensity of radiation at the reference wavelength λref are input to the processor. By comparing the detected intensity of radiation at the measurement wavelength λ1 with the intensity of radiation at the reference wavelength, λref, the amount of absorption, and hence the concentration of the gas constituent within the cell 12, can be determined.

The reference intensity measurement will be influenced by smoke particulates within the gas sample, as smoke particulates have a relatively broadband infra red absorption characteristic. The reference intensity measurement will also be influenced by particulate deposits which may build up on the optical components of the sensor (in particular, deposits on the inlet and outlet windows 27, 30 of the cell 12) and the effects of wear and ageing during the service life of the sensor. The three contributions to the reference intensity measurement are thus due to (I) smoke particulates within the gas sample, (II) variations in optical path length through the sensor due to particulate deposits on sensor hardware, and (III) the effects of wear or ageing of the sensor hardware and electronics. For the purpose of this specification, the contributions (II) and (III) shall be referred to as the contribution due to "sensor system characteristics". The measured intensity value at wavelength λ1 will also be influenced by the system characteristics (i.e. contributions (II) and (III)). Thus in order to determine an accurate measurement of concentration of gas constituents by comparing the measured intensity at λ1 with the reference intensity value, it is necessary to compensate for contributions (II) and (III).

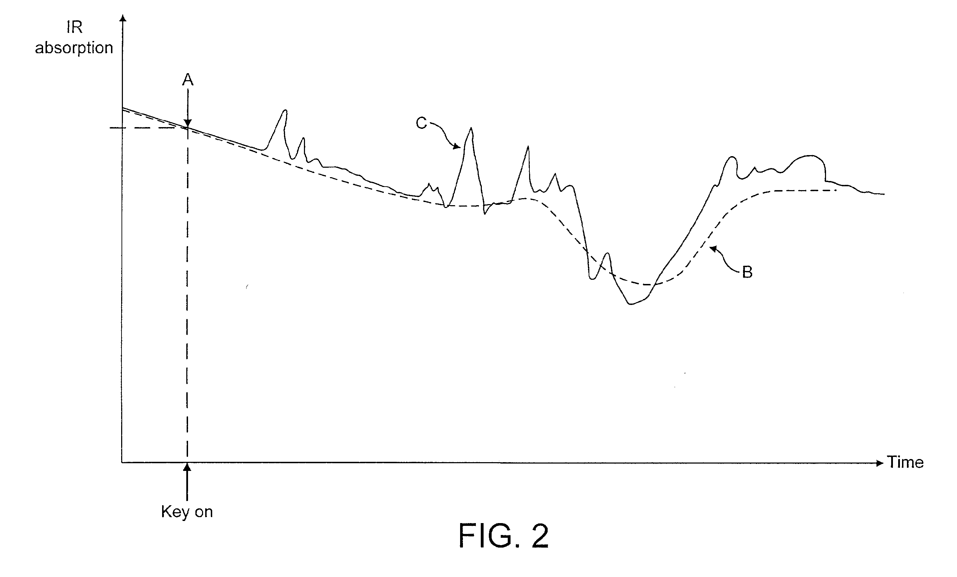

Figure 2 is a graph to show infrared absorption within the measurement cell 12 as a function of time, and illustrates three intensity measurements which are made. Just prior to engine start-up, for example as the ignition key is keyed in (referred to as "key on" or "pre-ignition") and with substantially no exhaust gas within the cell 12, radiation at the reference wavelength λref is transmitted through the cell 12 to the detection module 35. At key on, a first measurement of the intensity of radiation at the detection module 35 is made (INT_{A}).

Subsequently the engine is started and, with the engine running, a second intensity measurement (INT_{B}) is made at the reference wavelength, λref, a signal representative of this measurement is supplied to the processor. The second intensity measurement is time-averaged over a relatively long time period (typically 30 seconds) and therefore provides an indication of the contribution to the measured reference intensity due to ongoing contamination effects, i.e. variations in the optical path length through the sensor due to particulate build up on the sensor components (contribution (II)) and due to wear and ageing effects (contribution (III)). Any contribution due to smoke particulates (contribution(I)) will be time-filtered out from the second intensity measurement, INT_{B}.
A third intensity measurement (INT_{C}) is made, which is time-averaged over a shorter time period, typically of the order of several microseconds. The third time-averaged intensity measurement includes contributions (I), (II) and (III) i.e. due to absorption by smoke particulates within the measurement cell 12, the effects of optical path length variations and the effects of ageing/wear.

The three intensity measurements, INTA, INTB, INTc, are provided to the engine controller for processing in software so as to provide a determination of contributions (II) and (III). By subtracting the intensity measurement INT_{B} from the intensity measurement INT_{C}, it is thus possible to deduce a contribution to the intensity measurement due to system characteristics (contributions (II) and (III)). This contribution can then be subtracted from the reference intensity measurement, INT_{A}, to provide a corrected reference intensity value, INT_{CORR}. The corrected reference intensity value (INT_{CORR}) represents the intensity of radiation transmitted through the measurement cell 12 at the reference wavelength with no gas sample present.

The contribution to the reference intensity measurement due to system characteristics (contributions (II) and (III)) is also present in the intensity measurement at the measurement wavelength, λ1. Radiation at the measurement wavelength, λ1, is transmitted through the cell, this wavelength being selected to coincide with a maximum in the infra red absorption characteristic for the constituent gas of the exhaust it is required to measure. An intensity measurement (INT) is made, time averaged over a relatively short time period of the order of several milliseconds. The intensity measurement INT includes a contribution due to system characteristics (contributions (II) and (III) described above), but this contribution can be eliminated by using the results of the reference intensity calculation. The compensated intensity measurement is then compared with the corrected reference intensity measurement to provide an accurate determination of the concentration of the gas constituent within the sample.

Pre-determined absorption characteristic data of the gas constituent to be measured is stored within the processor and the detector output signals can be used to determine the relative strength or concentration of the constituents of the exhaust by reference to and manipulation of this data, in software. Typically, the sensor may be used to determine the relative concentration of one or more of CO, HC, CO₂ and NOx within the gas sample.

If it is desired to measure the concentrations of second and third constituents, radiation at λ2 and λ3 is also transmitted through the cell and the intensity of radiation which passes unabsorbed through the cell at each of these two wavelengths is measured. The wavelengths λ2 and λ3 are selected to correspond to substantially the maxima in the infra red absorption characteristic for the second and third constituents respectively. An intensity measurement is made at each of the two wavelengths, λ2 and λ3, and the contribution to each intensity measurement due to system characteristics is eliminated using the results of the reference intensity measurements described previously. An accurate determination of the concentration of the second and third constituents within the exhaust stream can therefore be determined.

By way of example, radiation emitted from the source 22 may include wavelengths λ1, λ2, λ3 falling within the range of 3 to 5.5 µm. The detector arrangement 36 may include three semiconductor detector elements, each of which is sensitive to a different one of the wavelengths, *λ*1, *λ*2, *λ*3, and thus outputs a signal which is indicative of the intensity of radiation at said wavelength.

In the case of multiple wavelengths being used, radiation emitted by the source 22 may be broadband, in which case three detector elements may be required in the detector arrangement 36, a different one for measuring the intensity at each of the three different wavelengths. Alternatively, a single detector element may be used which is sensitive to a range of wavelengths, and the source 22 may be arranged to provide pulsed radiation.

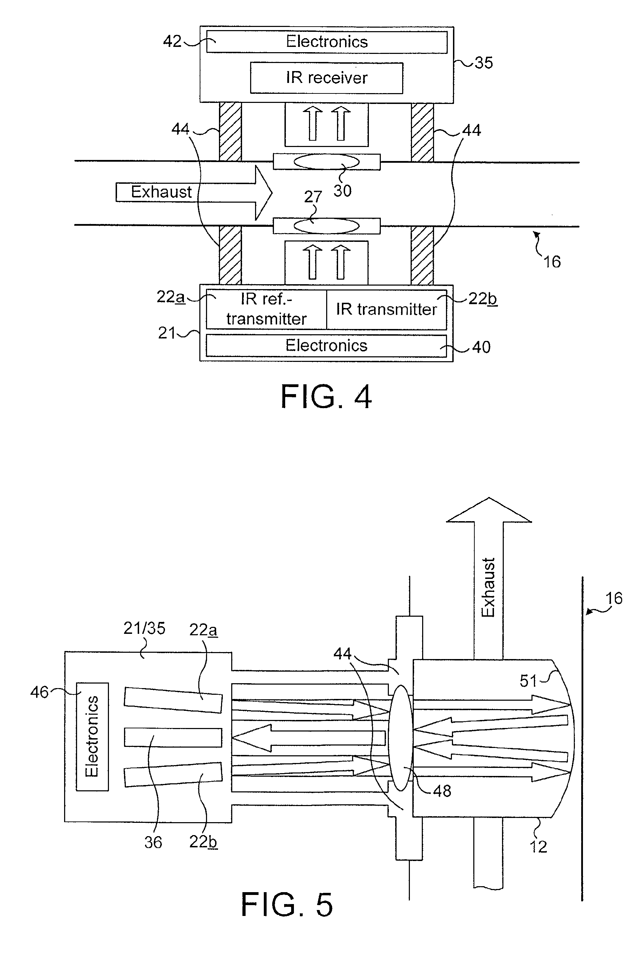

The method of the present invention may also be used with other similar types of sensor, such as those shown in Figures 3 to 7.

In Figure 3, the sensor is oriented such that radiation from the emitter module 21 traverses the main exhaust pipe 16 to be detected at the detection module 35 arranged on the opposite side of the pipe 16. Inlet and outlet optical interfaces 27/28, 30/31 respectively are located on opposite sides of the main exhaust pipe 16 to couple incident and transmitted radiation into and out of the pipe 16 respectively. If desired, the source 22 and the detector arrangement 36 may be located remote from the exhaust pipe 16 by virtue of the optical fibres 24, 34, and these may be of relatively long length. This provides the advantage that adverse effects of high temperatures at the source 22 and at the detector arrangement 36 are reduced.

Figure 4 shows a further alternative embodiment in which the emitter module 21 is provided with first and second sources 22a, 22b, wherein the first source transmits a reference beam of infrared radiation through the exhaust pipe 16 and the second source 22b transmits infrared radiation at one or more different wavelengths. An electronics unit 40 for the sources 22a, 22b is also shown in Figure 4 and forms part of the emitter module 21. The detection module 35 also includes an associated electronics unit 42. Thermal insulation 44 is provided adjacent to the exhaust pipe 16 to thermally insulate the emitter module 21 and the detection module 35 from the hot exhaust flow within the pipe 16.

Figure 5 shows a further alternative embodiment of the sensor in which the sources 22a, 22b and the detector arrangement 36 are combined within a single module 21/35 along with an associated electronics unit 46. The measurement cell 12 is arranged directly within the main exhaust pipe 16 and radiation is coupled into the cell 12 through an optical window 48. An internal surface 51 of the cell 12 facing the optical window 48 is provided with a reflective coating or is formed from a reflective material so that radiation transmitted through gas within the cell 12 is reflected back through the optical window 48 to the detector arrangement 36 forming part of the emitter/detection module 21/35. Thermal insulation 44 is also provided adjacent to the exhaust pipe 16 to thermally insulate the sources 22a, 22b, the detector arrangement 36 and the associated electronics 46 from hot exhaust. In Figure 5, radiation transmitted from the sources 22a, 22b, and radiation reflected back to the detector arrangement 36, is passed through free space rather than through optical fibres.

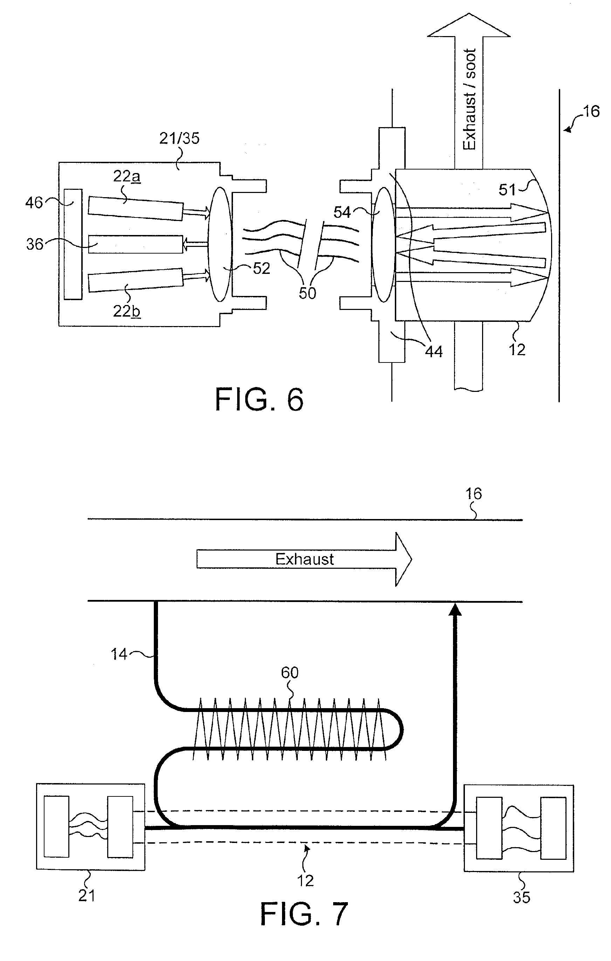

Figure 6 shows an alternative embodiment to that shown in Figure 5 in which optical fibres 50 are provided to transmit emitted radiation from the sources 22a, 22b to the measurement cell and to transmit reflected radiation from the measurement cell 12 to the detector arrangement 36. Optical windows 52, 54 are provided at the inlet and outlet ends respectively of the optical fibres 50. Emitted radiation from the sources 22a, 22b is coupled through the inlet optical window 52 into the optical fibres 50 and is coupled through the outlet optical window 54 to the measurement cell 12. Reflected radiation transmitted back to the detector arrangement 36 follows the reverse path. Preferably, the optical fibres 50 include at least a portion of thermally insulating optical fibre, for example sapphire optical fibre.

Where optical fibres are used, they may typically take the form of chalcogenide infrared (CIR) fibre, suitable for transmitting radiation in the range of between 2 and 6 µm and having an operating temperature range of 280-400 K. Alternatively, polycrystalline infrared (PIR) fibre may be used, suitable for transmitting radiation in the range of between 4 and 18 µm and having an operating temperature range of 210-470 K.

By decoupling the emitter module 21 and the detection module 35 from the measurement sample cell 12, problems associated with mechanical and thermal strain are reduced and the accuracy of measurement is improved considerably. Furthermore, by using fibre optic couplings between the emitter/detection modules 21, 35 and the measurement cell 12, the emitter and detection modules can be mounted in conveniently accessible positions and the sensor is substantially insensitive to vibrations of the exhaust pipe during vehicle movement.

As the absorption coefficient of each particular element is temperature dependent, the absorption characteristic of the gas sample within the cell 12 varies with temperature. At higher gas temperatures, for example, the measured intensities of radiation transmitted through the cell 12 may indicate a higher concentration of a particular gas element than is actually present. In order to obtain a more accurate, near temperature-independent measurement of the concentration of constituent gas elements, the temperature of the gas sample may be "pre-conditioned" to substantially eliminate the effects of temperature variation in the measured gas concentrations. Figure 7 shows an arrangement in which similar parts to those described in Figure 1 are denoted with like reference numerals. In addition, the gas sample pipe 14 is provided with a heat exchanger 60 to provide a degree of thermal stability.

The heat exchanger 60 may take the form of an electrical heater which is heated by means of the associated vehicle power supply. A current is supplied to the heat exchanger to raise the temperature of the gas sample pipe 14. A temperature sensor (not shown) for measuring the temperature of the gas in the measurement cell 12 is also provided. The level of current applied to the heat exchanger 60 and the time for which the current is applied are determined in software in the processor, in response to the measured temperature so as to heat or cool the gas sample such that it is maintained at a substantially constant temperature. Before any calculation is performed using the detector output signals, the gas sample is "pre-conditioned" by activating the heat exchanger 60 to re-establish the desired, constant temperature.

## Claims

1. A method for measuring the concentration of at least one constituent of an exhaust flow from an engine provided with a gas sensor system (10) having a measurement cell (12), the method comprising:
transmitting radiation at a reference wavelength (λref) through the measurement cell and calculating a corrected reference intensity which is representative of the intensity of radiation transmitted through the measurement cell (12) at the reference wavelength (λref) and substantially independent of gas sensor system characteristics,
transmitting radiation at a first measurement wavelength (λ1) through the measurement cell (12) and measuring a first intensity representative of the intensity of radiation transmitted through the measurement cell (12) at the first measurement wavelength, and
comparing the first intensity with the corrected reference intensity, thereby to deduce the concentration of a constituent of the exhaust stream substantially independently of gas sensor system characteristics.

2. The method as claimed in Claim 1, comprising:
transmitting radiation at the reference wavelength (λref) through the measurement cell (12) prior to engine ignition and measuring a reference intensity representative of the intensity of radiation transmitted through the measurement cell (12) prior to engine ignition,
transmitting radiation at the reference wavelength (λref) through the measurement cell during engine running and deducing a first reference intensity time-averaged over a first time period and a second reference intensity time-averaged over a second time period during engine running,
comparing the second time-averaged reference intensity with the first time-averaged reference intensity so as to deduce a system contribution to the reference intensity, and
calculating a corrected reference intensity in which the contribution from gas sensor system characteristics is substantially eliminated.

3. The method as claimed in Claim 1 or Claim 2, whereby radiation is transmitted through a measurement cell (12) forming part of a main engine exhaust pipe (16).

4. The method as claimed in Claim 3, comprising
delivering a gas sample through inlet sample means (14) to a measurement cell (12) arranged remotely from the main engine exhaust pipe (16).

5. The method as claimed in any of Claims 1 to 4, comprising
providing a gas sensor (10) having an emitter module (21) for emitting radiation to be transmitted through the measurement cell (12) and providing a detection module (35) for measuring the intensity of radiation transmitted through the measurement cell (12).

6. The method as claimed in Claim 5, comprising transmitting radiation transmitted to and/or from the measurement cell (12) through optical fibres (24, 34, 50)

7. The method as claimed in any of Claims 2 to 6, wherein the first time period is of the order of seconds.

8. The method as claimed in Claim 7, wherein the first time period is between 20 and 50 seconds.

9. The method as claimed in any of Claims 2 to 8, wherein the second time period is of the order of milliseconds.

10. The method as claimed in Claim 9, wherein the second time period is between 20 and 50 milliseconds.

11. The method as claimed in any of Claims 1 to 10, comprising transmitting radiation at two or more further measurement wavelengths, and measuring a respective further intensity representative of the intensity of radiation transmitted through the measurement cell (12) at the or each further measurement wavelength, and comparing the or each further intensity with the corrected reference intensity, thereby to deduce the concentration of two or more constituents of the exhaust flow.

12. A processor for carrying out the method steps as claimed in any one of claims 1 to 11, the processor including:
means for receiving a signal indicative of a first intensity, which is representative of the intensity of radiation transmitted through the measurement cell (12) at a first measurement wavelength,
means for receiving a signal indicative of a reference intensity,
calculation means for calculating a corrected reference intensity which is representative of radiation intensity transmitted through the measurement cell at a reference wavelength and substantially independent of gas sensor system characteristics, and
means for comparing the first intensity with the corrected reference intensity, thereby to deduce the concentration of a constituent of the exhaust stream substantially independently of gas sensor system characteristics.
